# EUROPEAN PATENT SPECIFICATION

(11) **EP 1 672 322 B1**
(45) Date of publication and mention of the grant of the patent: **23.01.2013**
(21) Application number: 05257598.2
(22) Date of filing: 12.12.2005
(51) Int. Cl.: G01D 5/14

(54) **Reconfigurable input/output interface**
Rekonfigurierbare Eingabe-/Ausgabeschnittstelle
Interface d'entrée/sortie reconfigurable

(30) Priority: 17.12.2004 US 16277
(43) Date of publication of application: 21.06.2006
(73) Proprietor: Hamilton Sundstrand Corporation, Windsor Locks, CT 06096-1010 (US)
(72) Inventor: Avritch, Steven A., Bristol, CT 06010 (US); Poisson, Richard A., Avon, CT 06001 (US); Bauer, Ronald P., Windsor Lock, CT 06096 (US)
(74) Representative: Leckey, David Herbert

(56) References cited:
- WO-A-99/32856
- US-A- 5 168 276

## Description

### TECHNICAL FIELD

The present invention relates to interfaces, and more particularly to a system that can handle inputs and outputs having different formats.

### BACKGROUND OF THE INVENTION

In devices with complex computer systems, such as aircraft and automobiles, multiple devices, such as sensors, loads and actuators, a variety of sensing devices are used to monitor various components in the system. The output of the various devices are then sent to a central computer for analysis and/or output to a user. Due to the number of characteristics that must be monitored and controlled in such systems, the number and types of devices can vary widely. Moreover, different device types may generate outputs having different encoding and/or electrical formats. For example, a single system may have devices that generate outputs in the form of a variable DC analog voltage, variable AC analog voltage, discrete on/off signal, variable frequency, variable AC phase, and/or variable resistance.

To handle these different output formats, currently known systems use custom interface circuits that extract intelligence from the device and convert the intelligence into an output that the central computer can use. An analog device output would, for example, be normally sent to a demodulator, then conditioned through a filter before being converted into a digital signal that is sent through a data bus to the central computer. The different electrical formats of the device outputs requires each device to have its own demodulator and conditioning circuitry to extract the device's intelligence and convert the output into digital form for processing. Thus, the physical hardware interface between the device and the computer will be different on a sensor-by-sensor basis, making it difficult to reuse the hardware if the devices are changed even minimally.

The location of the central computer can vary based on the overall system design, and this, in combination with the custom interface circuits, makes it difficult to use one standard computer system design for multiple systems. Any variations in the devices of the vehicle or aircraft, for example, necessitates a redesign and hardware reconfiguration of the computer system, resulting in inefficiencies in cost, weight, size, and performance attributes of the system. Reconfiguring the system hardware may also require the central computer to be removed completely from a given location to accommodate the hardware reconfiguration.

There is a desire for a system that can be reconfigured to accommodate a variety of different signal formats without requiring hardware changes or redundant design to accommodate the different formats. There is also a desire for an interface that can be used in different systems having varying numbers and types of devices without requiring extensive modification of the hardware in the interface.

WO 99/32856 discloses a universal sensor system in which a variety of stimulation signals are generated and sent to a plurality of sensors. The stimulation signals cause the sensors to generate response signals in the form of parametric measurements which are converted into a common format. The sensor response signals are processed and output as usable inputs to data consuming apparatus.

US 5168276 discloses an analog-to-digital conversion module and method which minimises software involvement by providing a programmable control table comprising a plurality of conversion command words.

### SUMMARY OF THE INVENTION

The present invention provides a reconfigurable interface of a system configurable to process input and output signals having different formats, comprising: at least one hardware channel, the at least one hardware channel corresponding with at least one device in the system and the at least one hardware channel comprising a converter and a signal line for connecting the converter to said at least one device, wherein the converter converts at least one of an input and an output of said at least one device; and a configuration table containing data that configures said at least one hardware channel to be compatible with said at least one device wherein said at least one hardware channel is reconfigurable as an input and an output with different formats responsive to the data in the configuration table.

In another aspect the present invention provides a system, comprising: a plurality of devices; a signal processor; and the reconfigurable interface as defined above coupled between said plurality of devices and the signal processor.

In preferred embodiments the present invention is directed to a reconfigurable interface that allows device-specific processing to be performed in software rather than hardware. The reconfigurable interface includes an analog-to-digital converter that samples an output at high speed from at least one device to convert the output into a digital signal. The digital signal can then be processed in any desired manner, such as to extract intelligence and/or condition the signal. The conversion and the processing are controlled by data entered into a configuration table. The configuration table can easily be modified if the devices in a given system are changed or if the reconfigurable interface is used in a different system.

Because the reconfigurable interface converts the device outputs before they are processed in any manner, the same reconfigurable interface can be used for any type of device and the devices do not require customized hardware interfaces to communicate with a signal processor. Thus, any system reconfiguration can be conducted simply through software modification rather than hardware modification.

### BRIEF DESCRIPTION OF THE DRAWINGS

Figure 1 is a block diagram illustrating a system having a reconfigurable interface according to one embodiment of the invention;
Figure 2 is a representative diagram illustrating a general process carried out by the system in Figure 1;
Figure 3 is a block diagram illustrating the system of Figure 1 in more detail.

### DETAILED DESCRIPTION OF THE EMBODIMENTS

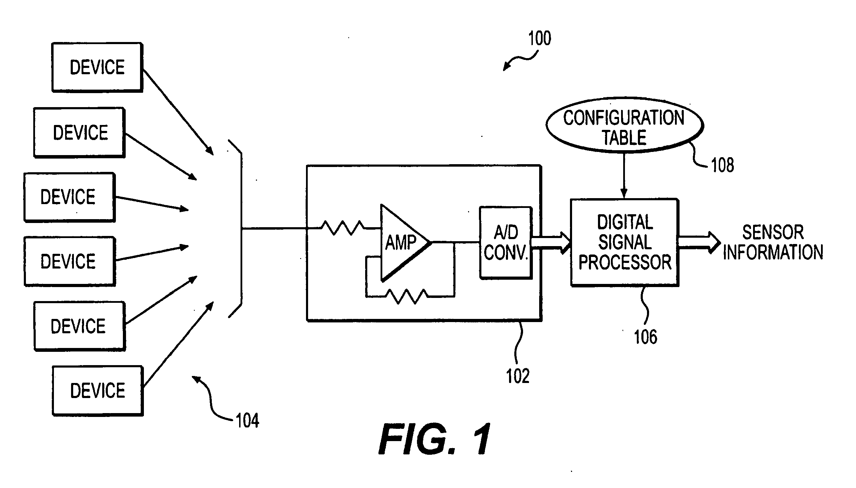

Figure 1 is a representative block diagram illustrating a system 100 incorporating a reconfigurable interface 102. The reconfigurable interface 102 links devices 104 (e.g., sensors, actuators, loads, etc.) to a digital signal processor 106, which in turn generates an output based on the device information and information in a configuration table 108. Generally, the reconfigurable interface 102 acts as a universal signal conditioner that digitizes outputs having different formats so that they can be processed in the signal processor 106 without requiring hardware customization of the reconfigurable interface 102 or any other components. The reconfigurable interface 102 can also convert digital signals into analog signals to be sent back to the devices 104, if desired. In other words, data in the configuration table 108 configures the reconfigurable interface 102 to be compatible with the devices 104 so that the device outputs can be converted into a usable format, regardless of the original format of the device output.

The reconfigurable interface 102 therefore allows the devices 104 to be changed, removed, and/or added without requiring any hardware reconfiguration to accommodate the new device 104 configuration. Instead, the configuration table 108 can be modified via any known method (e.g., through a user interface 110 on a computer) to handle the device changes. Also, the reconfigurable interface 102 can be easily expanded and contracted to handle different numbers of devices 104 without requiring hardware modifications to the system 100.

The configuration table 108 itself includes any data that may be used to convert inputs and outputs of the devices 104 into usable form and to extract intelligence from the devices 104. For example, the configuration table 108 may include, but is not limited to, pre-processing and post-processing instructions, individual device parameters and ranges, device voltages, filter types, parameters, sampling rates, etc. Inputs can be reconfigured for any sensor within operable limits, and outputs can be reconfigured for any load within operable limits. Moreover, pins on the devices 104 can be configured as either inputs or outputs, depending on the overall configuration of the system 100. The information that could be included in the configuration table 108 is essentially limitless because converting the device outputs into the digital domain without losing any quality of information provides a great deal of flexibility as to how they can be processed and evaluated. For example, if a user wishes to apply a particular filter on a device output, the characteristics of the desired filter can simply be entered into the configuration table 108. This is much more flexible than building an actual customized filter in hardware.

The reconfigurable interface 102 allows the same signal processor 106 and general hardware configuration to be used in multiple systems 100 having different devices 104. Moreover, each device 104 no longer requires its own unique hardware channel to convert the information from the device 104 into digital form to be usable by the signal processor 106.

As noted above, different devices 104 may generate outputs having different formats. As is known in the art, input sensors for electrical systems fall in several different categories and output intelligence in different formats. For example, speed and pressure sensors may generate outputs in a frequency signal format, while a potentiometer may generate an output as a DC voltage. Other possible output formats for both sensors and loads include, but are not limited to, variable resistance, AC or DC voltage/current, discrete on/off signals, pulse width modulated signals, and amplitude modulated signals. Those of skill in the art will recognize that the specific format of the output generated by the devices 104 is not critical to the scope of the invention.

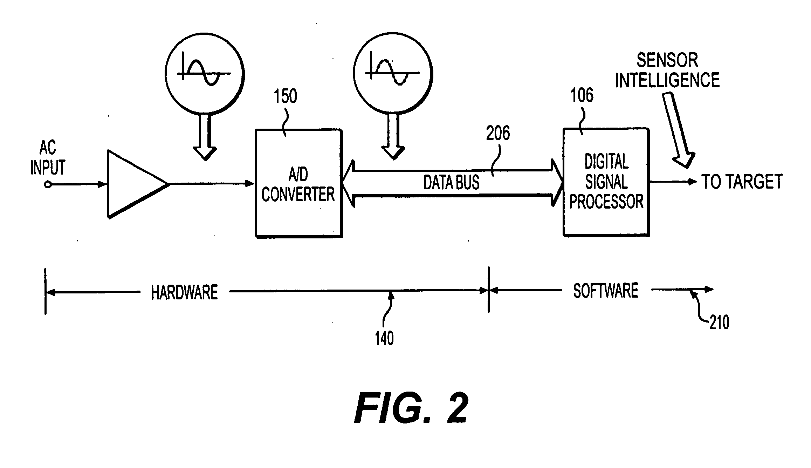

Figure 2 illustrates the operation of the reconfigurable interface 102 in greater detail. The devices 104 and the reconfigurable interface 102 act as a hardware side 140 of the system 100. The reconfigurable interface 102 first receives outputs from the devices 104 and converts the outputs into digital form immediately in an A/D converter 150, without extracting intelligence from the output. To do this, the reconfigurable interface 102 samples the outputs at a rate fast enough to interpolate the original waveform. The Nyquist Theory states that the sampling frequency needs to be at least twice the absolute maximum frequency that the output can reach to recover all pertinent signal information (i.e., peaks and troughs in the signal). Note that the reconfigurable interface 102 may also include a D/A converter 152 to convert digital signals into an analog format usable by a given device 104. The high speeds of currently available A/D converters (for collecting inputs form the devices 104), D/A converters (for controlling output signals) and processors (e.g., the signal processor 106 and CPUs) allow sampling at rates that satisfy the Nyquist Theory. Thus, it is possible to convert the analog outputs from the devices 104 into digital form without losing any of the information in the outputs if the outputs are sampled at a rate that is at least the Nyquist sampling rate.

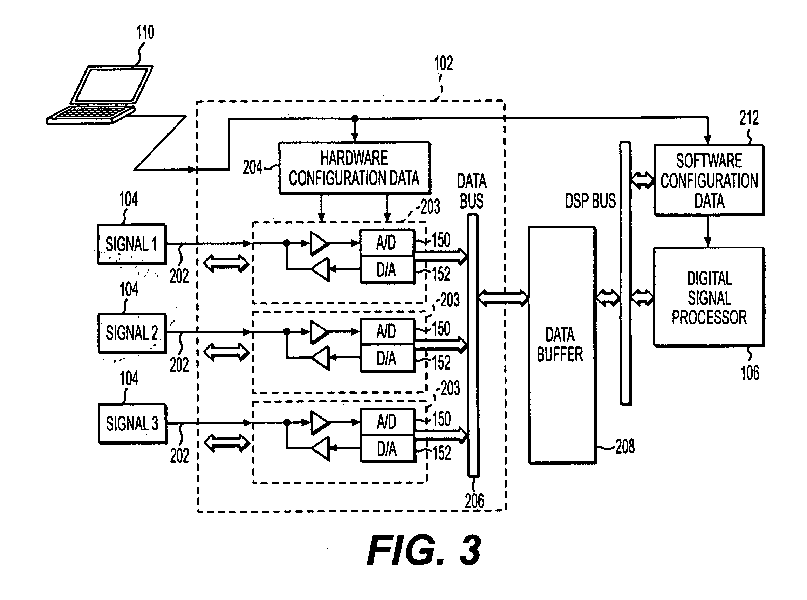

Referring to Figures 2 and 3, each device has an associated reconfigurable input/output hardware channel, each channel having an associated signal line 202 and a converter 203 in the reconfigurable interface 102. The converter 203 may include the A/D converter 150 and/or the D/A converter 152. Each hardware channel is reconfigurable through hardware configuration data 204 in the configuration table 108. The user interface 110 allows the data in the configuration table 108 to be easily changed so that the system 100 can accommodate changes in the number, location, type and output formats of the devices 104 without requiring any reconfiguration in the hardware.

The reconfigurable interface 102 then sends the sampled, digitized device output through a data bus 206 into a data buffer 208. The data buffer 208 and the signal processor 106 serve as a software side 210 of the system 100. The signal processor 106 then extracts intelligence from the sampled device outputs based on software configuration data 212 in the configuration table 108. The extracted intelligence may be sent to a target (not shown) for further action. Extracting intelligence from the device output on the software side 210 rather than the hardware side 140 further eliminates the need for any hardware reconfiguration if the devices 104 change because reconfiguration is conducted through software modifications (i.e., changing data in the configuration table 108) rather than hardware modifications. Because the signal processor 106 is fast enough to support complex algorithms, it can conduct virtually any desired processing of the device outputs to obtain the needed intelligence from the devices and, if desired, provide the devices 104 with information in their respective compatible signal formats as well.

As a result, the inventive reconfigurable interface allows the system to be reconfigured to accommodate a variety of sensors having different input/output formats without requiring any hardware modification. Also, the same reconfigurable interface can be used on multiple systems having differing numbers and types of devices without requiring any hardware reconfiguration in the system itself.

It should be understood that various alternatives to the embodiments of the invention described herein may be employed in practicing the invention. It is intended that the following claims define the scope of the invention and that the method and apparatus within the scope of these claims and their equivalents be covered thereby.

## Claims

1. A reconfigurable interface (102) of a system configurable to process signals having different formats, **characterized by**:
at least one hardware channel, the at least one hardware channel corresponding with at least one device (104) in the system and the at least one hardware channel comprising a converter (203) and a signal line (202) for connecting the converter to said at least one device, wherein the converter (203) converts at least one of an input from and an output to said at least one device (104); and
a configuration table (108) containing data that configures said at least one hardware channel to be compatible with said at least one device (104), wherein said at least one hardware channel is reconfigurable as an input from and as an output to said at least one device (104) with different formats responsive to the data in the configuration table.

2. The reconfigurable interface of claim 1, wherein the converter comprises an analog-to-digital (A/D) converter (150) that converts an analog input from said at least one device (104) into a digital signal.

3. The reconfigurable interface of claim 2, wherein the A/D converter (150) converts the analog input by sampling the analog input at a rate that is at least a Nyquist sampling rate.

4. The reconfigurable interface of claim 1, 2 or 3, wherein the converter comprises a digital-to-analog (D/A) converter (152) that converts a digital signal into an analog output to said at least one device (104).

5. The reconfigurable interface of any preceding claim, wherein said at least one hardware channel comprises a plurality of hardware channels corresponding to a plurality of devices (104).

6. The reconfigurable interface of claim 5, wherein said plurality of devices (104) generates outputs having at least two different formats.

7. The reconfigurable interface of any preceding claim, further comprising a user interface (110) that communicates with the configuration table (108) to allow modification of the data in the configuration table (108).

8. The reconfigurable interface of claim 7, wherein modification of the data in the configuration table further comprises changes in one or more of a number, location, type and output format of said at least one device.

9. The reconfigurable interface of any preceding claim, wherein the configuration table (108) comprises hardware configuration data that configures said at least one hardware channel and software configuration data that configures a signal processor that processes (106) at least one of the input from and the output to said at least one device (104).

10. A system, comprising:
a plurality of devices (104);
a signal processor (106); and
the reconfigurable interface (102) as claimed in any preceding claim coupled between said plurality of devices (104) and the signal processor (106).

11. The system of claim 10, further comprising a data buffer (208) in communication with the signal processor (106) and the reconfigurable interface (102), wherein the data buffer (208) stores information from at least one of the reconfigurable interface (102) and the signal processor (106).

12. The system of claim 10 or 11, wherein the signal processor (106) extracts information from the output of the device (104) and outputs the information to a target.

## Patentansprüche

1. Rekonfigurierbare Schnittstelle (102) eines Systems, welches konfigurierbar ist, Signale mit unterschiedlichen Formaten zu verarbeiten, **gekennzeichnet durch**:
wenigstens einen Hardwarekanal, wobei der wenigstens eine Hardwarekanal zu wenigstens einem Gerät (104) in dem System gehört und der wenigstens eine Hardwarekanal einen Wandler (203) und eine Signalleitung (202) zum Verbinden des Wandlers mit dem wenigstens einem Gerät aufweist, wobei der Wandler (203) wenigstens eines einer Eingabe von und einer Ausgabe an das wenigstens eine Gerät (104) wandelt; und
eine Konfigurationstabelle (108), welche Daten enthält, die den wenigstens einen Hardwarekanal konfigurieren, um kompatible mit dem wenigstens einen Gerät (104) zu sein, wobei der wenigstens eine Hardwarekanal mit unterschiedlichen Formaten während einer Eingabe von und einer Ausgabe an das wenigstens eine Gerät (104) in Reaktion auf die Daten in der Konfigurationstabelle rekonfigurierbar ist.

2. Rekonfigurierbare Schnittstelle gemäß Anspruch 1, wobei der Wandler einen Analog-zu-Digital (A/D)-Wandler (150) aufweist, der eine analoge Eingabe von dem wenigstens einen Gerät (104) in ein digitales Signal wandelt.

3. Rekonfigurierbare Schnittstelle gemäß Anspruch 2, wobei der A/D-Konverter (150) die analoge Eingabe durch Abtasten der analogen Eingabe bei einer Rate wandelt, die wenigstens eine Nyquist-Abtastrate ist.

4. Rekonfigurierbare Schnittstelle gemäß Anspruch 1, 2 oder 3, wobei der Wandler einen Digital-zu-Analog (D/A)-Wandler (152) aufweist, der ein digitales Signal in eine analoge Ausgabe an das wenigstens eine Gerät (104) wandelt.

5. Rekonfigurierbare Schnittstelle gemäß einem der vorhergehenden Ansprüche, wobei der wenigstens eine Hardwarekanal eine Vielzahl von Hardwarekanälen aufweist, die zu einer Vielzahl von Geräten (104) gehören.

6. Rekonfigurierbare Schnittstelle gemäß Anspruch 5, wobei die Vielzahl von Geräten (104) Ausgaben mit wenigstens zwei unterschiedlichen Formaten erzeugt.

7. Rekonfigurierbare Schnittstelle gemäß einem der vorhergehenden Ansprüche, weiter aufweisend eine Nutzerschnittstelle (110), die mit der Konfigurationstabelle (105) kommuniziert, um eine Modifikation der Daten in der Konfigurationstabelle (108) zu erlauben.

8. Rekonfigurierbare Schnittstelle gemäß Anspruch 7, wobei eine Modifikation der Daten in der Konfigurationstabelle weiter Änderungen in einem oder mehreren von einer Zahl, einem Ort, einem Typ und einem Ausgabeformat des wenigstens einen Geräts aufweist.

9. Rekonfigurierbare Schnittstelle gemäß einem der vorhergehenden Ansprüche, wobei die Konfigurationstabelle (108) aufweist Hardwarekonfigurationsdaten, die den wenigstens einen Hardwarekanal konfigurieren, und Softwarekonfigurationsdaten, die einen Signalprozessor (106) konfigurieren, der wenigstens eines von der Eingabe von und der Ausgabe an wenigstens eine Gerät (104) verarbeitet.

10. System aufweisend:
eine Vielzahl von Geräten (104);
einen Signalprozessor (106); und
die rekonfigurierbare Schnittstelle (102) gemäß einem der vorhergehenden Ansprüche, welche zwischen die Vielzahl von Geräten (104) und den Signalprozessor (106) gekoppelt ist.

11. System gemäß Anspruch 10, weiter aufweisend einen Datenpuffer (108) in Kommunikation mit dem Signalprozessor (106) und die rekonfigurierbare Schnittstelle (102), wobei der Datenpuffer (208) Informationen von wenigstens einem von der rekonfigurierbaren Schnittstelle (102) und dem Signalprozessor (106) speichert.

12. System gemäß Anspruch 10 oder 11, wobei der Signalprozessor (106) Informationen aus der Ausgabe des Geräts (104) extrahiert und die Informationen an ein Ziel ausgibt.

## Revendications

1. Interface reconfigurable (102) d'un système configurable pour traiter des signaux ayant différents formats, **caractérisée par** :
au moins un canal matériel, l'au moins un canal matériel correspondant à au moins un dispositif (104) dans le système et l'au moins un canal matériel comprenant un convertisseur 203 et une ligne de signal (202) pour connecter le convertisseur audit au moins un dispositif, dans lequel le convertisseur 203 convertit au moins l'une d'une entrée provenant dudit au moins un dispositif (104) et d'une sortie allant audit au moins un dispositif (104) ; et
une table de configuration (108) contenant des données qui configurent ledit au moins un canal matériel pour qu'il soit compatible avec ledit au moins un dispositif (104), ledit au moins un canal matériel étant reconfigurable comme entrée provenant dudit au moins un dispositif (104) et une sortie allant audit au moins un dispositif (104) avec différents formats en réponse aux données dans la table de configuration.

2. Interface reconfigurable selon la revendication 1, dans laquelle le convertisseur comprend un convertisseur analogique/numérique (A/N) (150) qui convertit une entrée analogique provenant dudit au moins un dispositif (104) en un signal numérique.

3. Interface reconfigurable selon la revendication 2, dans laquelle le convertisseur A/N (150) convertit l'entrée analogique en échantillonnant l'entrée analogique à une cadence qui est au moins une cadence d'échantillonnage de Nyquist.

4. Interface reconfigurable selon la revendication 1, 2 ou 3, dans laquelle le convertisseur comprend un convertisseur numérique/analogique (N/A) (152) qui convertit un signal numérique en une sortie analogique allant audit au moins un dispositif (104).

5. Interface reconfigurable selon l'une quelconque des revendications précédentes, dans laquelle ledit au moins un canal matériel comprend une pluralité de canaux matériels correspondant à une pluralité de dispositifs (104).

6. Interface reconfigurable selon la revendication 5, dans laquelle ladite pluralité de dispositifs (104) génère des sorties ayant au moins deux formats différents.

7. Interface reconfigurable selon l'une quelconque des revendications précédentes, comprenant en outre une interface utilisateur (110) laquelle communique avec la table de configuration (108) pour permettre la modification des données dans la table de configuration (108).

8. Interface reconfigurable selon la revendication 7, dans laquelle la modification des données dans la table de configuration comprend en outre des changements de l'un ou plusieurs d'un nombre, emplacement, type et format de sortie dudit au moins un dispositif.

9. Interface reconfigurable selon l'une quelconque des revendications précédentes, dans laquelle la table de configuration (108) comprend des données de configuration de matériel qui configurent ledit au moins un canal matériel et des données de configuration de logiciel qui configurent un processeur de signal qui traite (106) au moins l'une de l'entrée provenant dudit au moins un dispositif (104) et de la sortie allant audit au moins un dispositif (104).

10. Système, comprenant :
une pluralité de dispositifs (104) ;
un processeur de signaux (106) ; et
l'interface reconfigurable (102) selon l'une quelconque des revendications précédentes couplée entre ladite pluralité de dispositifs (104) et le processeur de signaux (106).

11. Système selon la revendication 10, comprenant en outre un tampon de données (208) en communication avec le processeur de signaux (106) et l'interface reconfigurable (102), dans lequel le tampon de données (208) mémorise les informations provenant au moins de l'un de l'interface reconfigurable (102) et du processeur de signaux (106).

12. Système selon la revendication 10 ou 11, dans lequel le processeur de signaux (106) extrait des informations de la sortie du dispositif (104) et produit en sortie les informations à l'intention d'une cible.
